# EUROPÄISCHE PATENTSCHRIFT

(11) **EP 4 434 100 B1**
(45) Veröffentlichungstag und Bekanntmachung des Hinweises auf die Patenterteilung: **31.12.2025**
(21) Anmeldenummer: 23804635.3
(22) Anmeldetag: 07.11.2023
(51) Int. Cl.: H01M 4/04, H01M 10/04, H01M 10/0583, H01M 10/0585

(54) **VORRICHTUNG ZUM Z-FÖRMIGEN FALTEN EINES SEPARATORS UND VERFAHREN ZUM HERSTELLEN EINER ELEKTRODEN-SEPARATOREN-ANORDNUNG**
DEVICE FOR FOLDING A SEPARATOR IN A Z-SHAPED MANNER, AND METHOD FOR PRODUCING AN ELECTRODE-SEPARATOR ASSEMBLY
DISPOSITIF DE PLIAGE EN Z D'UN SÉPARATEUR ET PROCÉDÉ DE FABRICATION D'UN ENSEMBLE ÉLECTRODE-SÉPARATEUR

(30) Priorität: 01.12.2022 DE 102022004504
(43) Veröffentlichungstag der Anmeldung: 25.09.2024
(73) Patentinhaber: Mercedes-Benz Group AG, 70372 Stuttgart (DE)
(72) Erfinder: KLEIN, Malte Henrik, 70597 Stuttgart (DE); DUBBE, Hendrik, 70619 Stuttgart (DE)
(74) Vertreter: Novagraaf Group
(86) Internationale Anmeldenummer: PCT/EP2023/081016
(87) Internationale Veröffentlichungsnummer: WO 2024/115061

(56) Entgegenhaltungen:
- DE-A1- 102018 200 958
- JP-A- 2003 243 270
- JP-A- 2009 140 776
- JP-A- 2012 033 275

## Beschreibung

Die Erfindung betrifft eine Vorrichtung zum z-förmigen Falten eines sich in einer Längsrichtung erstreckenden bandförmigen Separators für eine Elektroden-Separatoren-Anordnung einer Batterieeinzelzelle. Außerdem betrifft die Erfindung zwei verschiedene Verfahren zum Herstellen einer stapelförmigen Elektroden-Separatoren-Anordnung unter Zuhilfenahme einer derartigen Vorrichtung.

Die Herstellung von Elektroden-Separatoren-Anordnungen ist soweit aus dem allgemeinen Stand der Technik bekannt. In der Praxis haben sich dabei drei Herstellungsverfahren durchgesetzt, welche beispielsweise in dem Artikel "Process and Performance Optimization by Selective Assembly of Battery Electrodes, Jan Schmitt et.al, CIRP Annals-Manufacturing Technology 63 (2014) 9-12" beschrieben sind. Im Wesentlichen wird dabei das Aufstapeln einzelner Separatorenblätter und Elektroden beschrieben sowie das Aufwickeln von Elektroden und Separatoren. Eine weitere Methode ist das sogenannte z-förmige Falten, welches allgemein als "z-Folding" bezeichnet wird. Hierfür wird ein endloser Separator verwendet, auf welchen jeweils eine Elektrode aufgelegt wird, bevor der Separator über dieser Elektrode umgeschlagen bzw. gefaltet wird, wonach die nächste blattförmige Elektrode aufgelegt wird, welche dann die jeweils andere Polarität aufweist. Im Anschluss wird der Separator wieder zurückgefaltet, die nächste Elektrode aufgelegt und so weiter. Der Separator wird dabei kontinuierlich als Rollenmaterial zugeführt und muss entsprechend hin und her bewegt werden. Der Vorteil des Stapelns oder des z-Foldings liegt dabei darin, dass im Gegensatz zum Wickeln keine Biegung der Elektroden erfolgt, was insbesondere bei Festkörper-Batterien ein entscheidender Vorteil sein kann. Der Vorteil des Wickelns liegt darin, dass eine sehr hohe Produktionsgeschwindigkeit erzielt werden kann, welche weder durch die nacheinander erfolgenden Prozesse des Stapelns noch des z-Foldings so nicht möglich ist.

Die JP 2003 243 270 A zeigt ein im Wesentlichen gattungsgemäßes Verfahren, bei welchem der Separator für eine Batterieeinzelzelle mit auflaminierten Elektroden über bewegliche Streben gefaltet wird, um einen z-flörmig gefalteten Elektrodenstapel für eine Batteriezelle auszubilden.

Eine ähnliche Verarbeitung von Elektroden und Separatoren zu einem z-förmig gefalteten Elektrodenstapel beschreibt außerdem die JP 2009 140 776 A. Ein weiteres derartiges Verfahren ist auch aus der DE 10 2018 200 958 A1 grundlegend bekannt.

Abschließend kann noch auf die JP 2012 033 275 A verwiesen werden, welche sich ebenfalls mit dieser Thematik beschäftigt und eine Vorrichtung zum f- förmigen Falten eines Elektrodenstapels grundlegend angibt.

Allen Verfahren gemeinsam ist es, dass die zum z-förmigen Falten eingesetzten Streben wieder aus dem Stapel bzw. gefalteten Material entfernt werden müssen. Dies ist vergleichsweise komplex. Im Stand der Technik wird dazu ein seitliches Herausziehen gezeigt und beschrieben, beispielsweise in der genannten JP 2009 104 776 A und der ebenfalls genannten JP 2012 003 275 A. Problematisch ist dies immer dann, wenn die Elektroden nicht bereits fix mit dem Separator laminiert sind, da dann ein Verrutschen der Elektroden innerhalb des Stapels verursacht werden kann, was zu Produktionsfehler führt. Die Aufgabe der hier vorliegenden Erfindung besteht deshalb darin eine Vorrichtung zum z-förmigen Falten eines Separators sowie geeignete Verfahren zum Herstellen einer Elektroden-Separatoren-Anordnung damit anzugeben, welche eine hohe Produktionsgeschwindigkeit ermöglichen.

Erfindungsgemäß wird diese Aufgabe durch eine Vorrichtung mit den Merkmalen im Anspruch 1, und hier insbesondere im kennzeichnenden Teil des Anspruchs 1, gelöst. Vorteilhafte Ausgestaltungen und Weiterbildungen der erfindungsgemäßen Vorrichtung ergeben sich aus den hiervon abhängigen Unteransprüchen. Eine verfahrensgemäße Lösung ist sowohl in dem Verfahren gemäß Anspruch 5 als auch in dem alternativen Verfahren gemäß Anspruch 6 angegeben.

Die erfindungsgemäße Vorrichtung dient also zum z-förmigen Falten eines sich in einer Längsrichtung erstreckenden bandförmigen Separators für eine Elektroden-Separatoren-Anordnung einer Batterieeinzelzelle. Die Vorrichtung umfasst dabei zwei Stempel, welche dazu eingerichtet sind den Separator, welcher auf eine zur Verfahren passende Länge abgelängt ist, an seinen beiden Enden in Längsrichtung einzuspannen. Zwischen den beiden Stempeln sind Bügel angeordnet, welche in Längsrichtung denselben Abstand zueinander aufweisen, und welche quer zur Längsrichtung verlaufende Streben umfassen. Diese Bügel sind in der Längsrichtung auf Schienen aufgenommen und in der Längsrichtung aus diesen Schienen verschiebbar. Die Schienen selbst sind in einer Höhenrichtung, welche quer sowohl zu Längsrichtung als auch zur Querrichtung liegt, beweglich, können also voneinander weg- oder aufeinander zubewegt werden. Die einzelnen Streben befinden sich Längsrichtung gesehen abwechselnd in der Höhenrichtung oberhalb und unterhalb der Einspannposition des Separators. Ist der Separator also zwischen den Stempeln eingespannt liegt jeweils abwechselnd eine der Streben oberhalb und eine der Streben unterhalb des Separators. Werden nun die Schienen voneinander wegbewegt, üben die mit den Schienen verbundenen Bügel auf die Streben entsprechend Kräfte aus, sodass der Separator von der einen Hälfte der Streben nach unten und von der anderen Hälfte der Streben nach oben gezogen wird. Dabei verändert sich dann auch die Position der beiden Stempel zueinander, da der Separator in der reinen Längsrichtung gesehen sich entsprechend verkürzt, da er nun ein z-förmig gefaltetes Band ausbildet. In einer Endposition der Stempel und der Schienen sind die Schienen maximal weit voneinander wegbewegt und die Stempel maximal aufeinander zubewegt, sodass ein z-förmig gefaltetes Paket des Separators zwischen den Stempeln zu liegen kommt.

Gemäß der Erfindung ist es dabei vorgesehen, dass die Streben beheizbar ausgebildet sind und/oder eine Schneidevorrichtung zum Durchtrennen des Separators im Bereich der Streben in einer maximal aufeinander zubewegten Position der Stempel vorgesehen ist.

Eine Variante sieht es ferner vor, dass die Streben ebenfalls beheizbar ausgebildet sind. Insbesondere bei einem laminierbaren Separator, welcher durch die beheizten Stempel zu der Einheit laminiert werden kann, macht dies Sinn. Auch bei anderen Separatoren ist es prinzipiell denkbar.

Im fertigen Endprodukt sind die Streben unerwünscht. Können diese nun entsprechend beheizt werden, lassen diese sich beispielsweise aus dem Separator entfernern, indem sie beheizt werden und dann die Schienen über ihre Endposition hinaus bewegt werden. Hierdurch werden die Separatoren im Bereich der Falten aufgeschmolzen und die Streben können quer zur Laufrichtung durch das aufgeschmolzene Material aus den Separatoren herausgezogen werden. Wenn gleichzeitig entsprechend der Druck von den Stempeln ausgeübt wird, schmelzen die aufgeschmolzenen Teile danach zusammen und helfen alternativ oder ergänzend zu den beheizten Stempeln die Einheit zu fixieren.

Alternativ oder ergänzend hierzu kann auch eine Schneidvorrichtung zum Durchtrennen des Separators im Bereich der Streben in einer maximal aufeinander zubewegten Position der Stempel vorgesehen werden. Eine solche Schneidvorrichtung kann ergänzend oder alternativ zum Einsatz beheizter Streben dabei helfen, die Streben entsprechend zu befreien. Das Schneiden kann dabei mechanisch beispielsweise über ein Messer, ein Rollmesser oder ähnliches erfolgen oder es kann ein Laser zum Schneiden eingesetzt werden. Diese Techniken eignen sich insbesondere dann, wenn ein nicht laminierfähiger Separator zum Einsatz kommt, bei welchem das Material nicht schadlos über Wärme aufgeschmolzen und/oder durchtrennt werden kann.

Gemäß einer sehr vorteilhaften Weiterbildung der Vorrichtung gemäß der Erfindung ist es dabei vorgesehen, dass die Länge der Streben in Querrichtung größer als die Breite des Separators ausgebildet ist. Solche breiteren Streben verbessern die Qualität der Faltung und erlauben beispielsweise die Ausgestaltung der Bügel in der Art, dass sie die Streben in Querrichtung an beiden Enden halten, um so beim Auseinanderfahren der Schienen über die Streben gleichmäßig Zug auf den Separator ausüben zu können.

Die Stempel können gemäß einer weiteren sehr vorteilhaften Ausgestaltung der Vorrichtung gemäß der Erfindung beheizbar ausgebildet sein. Eine solche Beheizbarkeit der Stempel ermöglicht insbesondere nach dem Zusammenfahren der Stempel in ihre Endposition durch die Beheizung ein Laminieren des Separators, sodass dieser entsprechend angeschmolzen wird, um einzelne Bereiche des Separators zu verbinden und dadurch eine fixierte Einheit aus dem Separator und typischerweise zuvor eingebrachter Elektroden auszubilden.

Um die Abläufe der Vorrichtung entsprechend zu koordinieren, sodass in dieser ein Separator z-förmig gefaltet werden kann, kann es gemäß einer sehr vorteilhaften Ausgestaltung der erfindungsgemäßen Vorrichtung vorgesehen sein, dass diese eine Steuerung zur Koordinierung der Bewegung der Stempel und der Schienen aufweist, wobei diese Steuerung insbesondere dazu eingerichtet ist, zum Falten des Separators die Schienen in der oben bereits beschriebenen Art voneinander weg und die Stempel auf einander zu zu bewegen, wobei die Bewegungen entsprechend koordiniert zwischen den Schienen und den Stempeln ausgeführt werden.

Ein erfindungsgemäßes Verfahren zum Herstellen einer stapelförmigen Elektroden-Separatoren-Anordnung für eine Batterieeinzelzelle mit einem durchlaufenden Separator kann es nun vorsehen, dass in einem Verfahrensschritt die Elektroden auf den Separator auflaminiert werden. Dabei wird auf jeder der Oberflächen des Separators in dessen Längsrichtung jeweils eine Elektrode auf einen freien Abschnitt mit zumindest der Länge der Elektrode folgen und sofort. Hierdurch lassen sich die Elektroden also abwechselnd mit freien Abschnitten in Längsrichtung des Separators anordnen, sodass nach dem Falten jeweils die eine Schicht des Separators, mit welchem die Elektrode laminiert ist, auf der einen Seite der Elektrode liegt und die andere Schicht mit dem freien Abschnitt auf die Elektrode aufgefaltet wird. Dabei ist es ferner so, dass auf jeder der Oberflächen des Separators jeweils Elektroden derselben Polarität angeordnet sind, also beispielsweise oben die Anoden und unten die Kathoden. Die Elektroden unterschiedlicher Polarität liegen sich dabei auf den jeweiligen Oberflächen zumindest teilweise gegenüber. Zumindest teilweise in diesem Zusammenhang kann bedeuten, dass die Anzahl beispielsweise der Anoden von der Anzahl der Kathoden abweicht, sodass also zur Vervollständigung der Faltung in einem der Randbereiche des Separators lediglich eine der Elektroden vorliegt. Nachdem ein solches Halbzeug aus dem Separator und den auflaminierten Elektroden hergestellt ist, wird in einem zweiten Verfahrensschritt dieses Halbzeug in einer Vorrichtung in einer der oben beschriebenen Ausgestaltungen z-förmig gefaltet, indem, wie es bereits angedeutet worden ist, die Schienen und die Stempel in ihrer jeweilige Endposition verfahren werden. Aus dem Halbzeug ist dann eine Elektroden-Separatoren-Anordnung entstanden, welche mit einem z-förmig gefalteten Separator ausgebildet ist.

Gemäß eines weiteren Verfahrens gemäß der Erfindung kann auch auf das Auflaminieren der Elektroden verzichtet werden, beispielsweise wenn ein Separator zum Einsatz kommt, welcher nicht laminierfähig ist. In diesem Fall wird in einem ersten Verfahrensschritt der Separator in einer Vorrichtung gemäß der oben beschriebenen Ausgestaltung vorgefaltet, indem die Schienen und Stempel in Richtung ihrer jeweiligen Endposition verfahren aber vor dem Erreichen der jeweiligen Endposition gestoppt werden. Der Separator liegt dann z-förmig gefaltet aber noch mit vergleichsweise stark geöffneten Taschen vor, welche jeweils nach oben und unten oder jeweils zur Seite, je nach Anordnung der Vorrichtung, weisen. Im Anschluss werden nun beispielsweise simultan alle Elektroden gleichzeitig oder in zwei Schritten hintereinander zuerst alle Anoden und dann alle Kathoden in die entsprechenden Taschen eingeschoben, beispielsweise die Kathoden von unten, die Anoden von oben oder bei einer gedrehten Anordnung entsprechend die Kathoden von links und die Anoden von rechts. Im Anschluss daran werden in einem dritten Verfahrensschritt die Schienen und Stempel in ihre jeweilige Endposition bewegt. Nun ist auch hier, ohne zuvor ein Halbzeug aus Elektroden und Separatoren herzustellen, die entsprechende z-förmig gefaltete Elektroden-Separatoren-Anordnung entstanden.

In beiden erfindungsgemäßen Verfahren kann dabei grundsätzlich ein Separator eingesetzt werden, welcher laminierfähig ist. In diesem Fall kann in einem weiteren Verfahrensschritt die Anordnung in der Endposition der Stempel zu einer Einheit fixiert werden, wofür die Stempel bei einer entsprechenden Ausgestaltung im oben beschriebenen Sinne beheizt werden können, sodass die Einheit durch Laminieren des Separators entsteht. Alternativ dazu können auch andere Methoden zur Fixierung der Einheit angewandt werden, beispielsweise das Einspritzen eines Klebstoffs von den Seiten der z-förmigen Faltung her, welche seitlich offen sind. Insbesondere kann zum Fixieren Klebeband verwendet werden, wenn der Separator nicht laminiert oder verschmolzen werden soll.

Erfindungsgemäß ist es beim Vorliegen einer solchen fixierten Einheit nun vorgesehen, dass der Separator im Bereich der Streben dieser fixierten Einheit aufgetrennt wird, um die Streben aus der Einheit zu entfernen. Dies kann im oben beschriebenen Sinn beispielsweise durch ein Schneiden mit mechanischen Mitteln oder mit Laser erfolgen oder auch durch ein Aufschmelzen des entsprechenden Separators, indem die Streben beheizt und die Schienen der Vorrichtung dann über die Endposition hinaus auseinander bewegt werden, um die Streben durch das aufgeschmolzene Material des Separators hindurch zu ziehen.

Weitere sehr vorteilhafte Ausgestaltungen der erfindungsgemäßen Vorrichtung sowie der Verfahren gemäß der Erfindung ergeben sich auch aus dem Ausführungsbeispiel, welches nachfolgend unter Bezugnahme auf die Figuren näher beschrieben ist.

Dabei zeigen:
- Fig. 1: eine Seitenansicht einer Vorrichtung gemäß der Erfindung in ihrer Ausgangsposition;
- Fig. 2: eine Ansicht gemäß der Linie II-II in Fig. 1;
- Fig. 3: eine Darstellung analog zu der in Fig. 1 in einer mittleren Position der Stempel und Schienen;
- Fig. 4: eine Ansicht gemäß der Linie IV-IV in Fig. 3;
- Fig. 5: eine Darstellung analog zu der in Fig. 1 in einer Endposition der Stempel und Schienen; und
- Fig. 6: eine Ansicht gemäß der Linie VI-VI in Fig. 5.

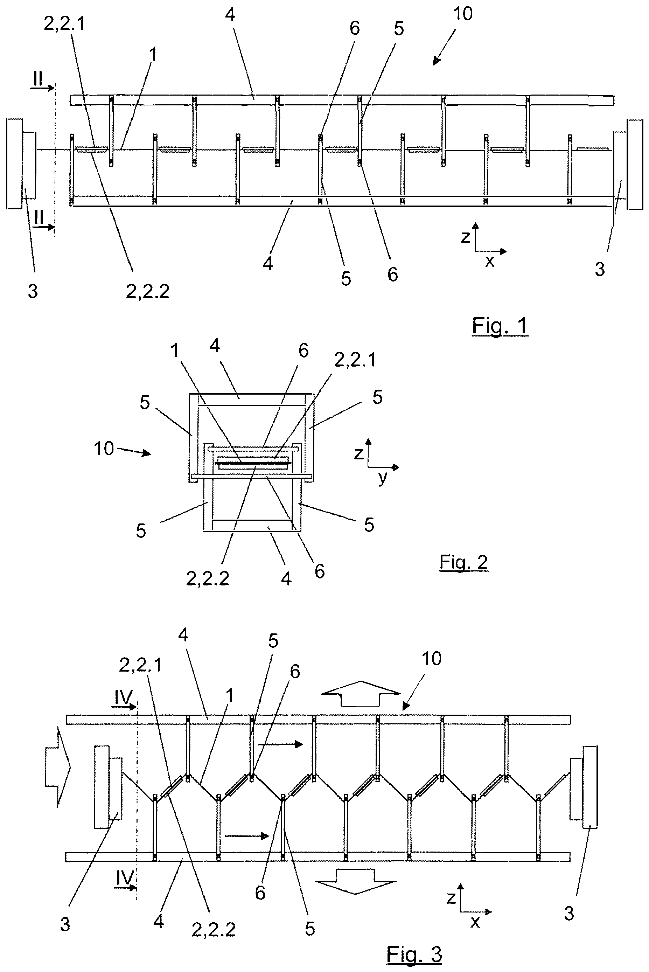

Anhand der nachfolgenden Figuren wird der Ablauf zur Herstellung einer z-förmig gefalteten Elektroden-Separatoren-Anordnung am Beispiel eines in Figur 1 erkennbaren Separators 1 mit auflaminierten Elektroden 2 beschrieben. Der Separator 1 ist dabei in einer Längsrichtung x zwischen zwei Stempel 3 eingespannt. Auf einer in einer Höhenrichtung z oben liegenden Oberfläche des Separators 1 sind dabei erste Elektroden 2, beispielsweise Anoden 2.1, angeordnet, jeweils darunter Kathoden 2.2. Dazwischen befinden sich immer leere Abschnitte des Separators 1, welche in der Längsrichtung x zumindest die Länge der daneben angeordneten Elektroden 2 aufweisen. Im ganz rechts dargestellten Abschnitt ist dabei lediglich eine Anode 2.1 angeordnet, auf die Kathode 2.2 wird hier verzichtet.

Neben der Seitenansicht in Figur 2 ist der Aufbau auch in der Ansicht der Figur 2 in einer Vorderansicht gemäß der Linie II-II in Figur 1 entsprechend zu erkennen. Auch hier ist der Separator 1 mit der Anode 2.1 in Höhenrichtung z oben auf dem Separator und die Kathode 2.2 in Höhenrichtung z unten auf dem Separator zu erkennen. In der Längsrichtung x verlaufen nun oberhalb und unterhalb des Separators 1 zwei Schienen 4, an welchen wie es in Figur 1 dargestellt ist mehrere Bügel 5, von welchen lediglich zwei mit einem Bezugszeichen versehen sind, angeordnet sind. Wie es aus der Darstellung der Figur 2 erkennbar ist, können diese Bügel 5 in einer Querrichtung y seitlich an den Schienen angebracht sein. Sie sind gegenüber den Schienen 4 in Längsrichtung x verschieblich. Die Bügel 5 weisen nun ihrerseits Streben 6 auf, welche in der Querrichtung y verlaufen, und welche insbesondere in der Darstellung der Figur 2 zu erkennen sind. Diese Streben 6 sind dabei, wie es insbesondere auch aus Figur 1 zu erkennen ist, in der Höhenrichtung z immer abwechselnd oberhalb und unterhalb des Separators 1 angeordnet, und zwar immer in den Grenzbereichen zwischen dem Bereich mit den Elektroden 2 und dem freien Abschnitt.

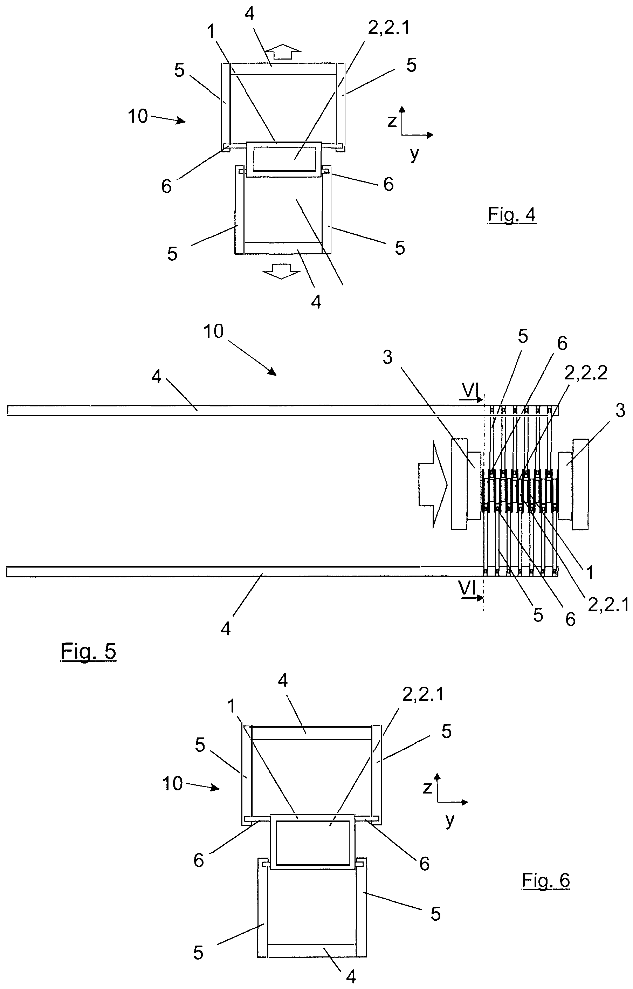

Das z-förmige Falten des Separators 1, um die gewünschte Elektroden-Separatoren-Anordnung zu schaffen, beginnt nun, indem einerseits die Stempel 3 aufeinander zugefahren werden, wofür in den hier dargestellten Figuren der links gezeigte Stempel 3 sich nach rechts bewegt. Gleichzeitig werden die beiden Schienen 4 auseinander bewegt, um so über die Bügel 5 und die Streben 6 an den entsprechenden Stellen Zugkräfte auf den Separator aufzubringen. Nach dem Start dieser Bewegung der in ihrer Gesamtheit mit 10 bezeichneten Vorrichtung befindet diese sich nun in der in den Figuren 3 und 4, analog zur Darstellung in den Figuren 1 und 2 gezeigten Position. Der Blick vom linken Stempel 3 aus, welcher wieder in der Figur 4 dargestellt ist, zeigt nun eine der Elektroden, hier die Anode 2.1 auf dem Separator 1. Die Schienen 4 und damit die über die Bügel 5 mit den Schienen 4 verbundenen Streben haben sich nach oben unten auseinander bewegt, um die z-förmige Faltung des Separators 1 in der Art einer Ziehharmonika zu bewerkstelligen. Die einzelnen Bügel 5 wandern allesamt in der Längsrichtung x auf den rechten Stempel 3 zu und sorgen dabei für die gewünschte Anordnung des Separators 1.

Diese Vorgehensweise, bei welcher die Schienen 4 auseinandergezogen und die Stempel 3 aufeinander zubewegt werden, wird nun entsprechend fortgesetzt, bis die in Figur 5 dargestellte Endposition der Stempel 3 und der Schienen 4 erreicht worden ist. Die beiden Stempel 3 verpressen nun die Elektroden-Separatoren-Anordnung zwischen sich und können beispielsweise beheizt werden, um bei einem laminierfähigen Separator 1 eine Einheit aus dem Separator 1 und den Elektroden 2 zu schaffen. Abschließend werden dann die Streben 6 aus dieser Einheit entfernt, wofür beispielsweise im Bereich der Streben 6 der Separator 1 aufgetrennt werden kann, wobei dies insbesondere mechanisch durch ein Messer oder bevorzugt durch ein Erhitzen der Streben 6 erfolgen kann. Die erhitzten Streben werden dann durch eine Bewegung der Schienen 4 über ihre Endposition hinaus aus der Einheit herausgezogen. Der angeschmolzene Separator kann sich dann wieder vereinen und die Einheit entsprechend dicht abschließen.

Die eingangs beschriebene Alternative, bei der die Elektroden 2 nicht auf den Separator 1 auflaminiert sind, würde in einer Zwischenstellung der Vorrichtung 10 zwischen den beiden in den Figuren 3 und 5 gezeigten Positionen die Bewegung der Stempel 3 und der Schienen 4 entsprechend anhalten, um die Elektroden in die Taschen einzulegen, beispielsweise alle Elektroden 2 gleichzeitig oder zuerst die Anoden 2.1 von oben und dann die Kathoden 2.2 von unten in der Darstellung der Figuren. Im Anschluss daran würde in die in Figur 5 gezeigte Endposition verfahren. Anstelle eines Aufschmelzens bzw. Erhitzens des Separators 1 zum Ausbilden der Einheit könnte hier dann ein seitliches Verkleben der Separatorenden erfolgen, beispielsweise durch eine Klebemasse, ein Klebeband oder dergleichen. Auch hier würden dann im Anschluss die Streben 6 entfernt, beispielsweise durch ein Aufschneiden der Separatoren 1, was dann wiederum von einem Umkleben derselben beispielsweise mit einem Klebeband gefolgt sein könnte.

## Patentansprüche

1. Vorrichtung (10) zum z-förmigen Falten eines sich in einer Längsrichtung (x) erstreckenden bandförmigen Separators (1) für eine Elektroden-Separatoren-Anordnung einer Batterieeinzelzelle mit zwei Stempeln (3) zum Einspannen des Separators (1) an seinen beiden Enden in Längsrichtung(x), wobei zwischen den beiden Stempeln (3) angeordnete Bügel (5) vorgesehen sind, welche in Längsrichtung (x) denselben Abstand zueinander aufweisen, und welche in einer quer zur Längsrichtung (x) verlaufenden Querrichtung (y) Streben (6) aufweisen, wobei Schienen (4) quer zur Längsrichtung (x) und quer zur Querrichtung (y) in einer Höhenrichtung (z) beweglich ausgebildet sind, und wobei die Streben (6) in Längsrichtung (x) gesehen abwechselnd in der Höhenrichtung (z) oberhalb und unterhalb der Einspannposition des Separators (1) angeordnet sind
**dadurch gekennzeichnet, dass**
die Bügel (5) entlang der Längsrichtung (1) verschieblich auf in Längsrichtung (x) verlaufenden Schienen (4) aufgenommen sind, wobei die Streben (6) beheizbar ausgebildet sind und/oder eine Schneidevorrichtung vorgesehen ist, zum Durchtrennen des Separators (1) in einer maximal aufeinander zubewegten Position der Stempel (3), um die Streben (6) quer zur Laufrichtung durch das Material des Separators (1) aus dem Separator (1) herauszuziehen.

2. Vorrichtung (10) nach Anspruch 1,
**dadurch gekennzeichnet, dass**
die Länge der Streben (6) in Querrichtung (y) größer als die Breite des Separators (1) in Querrichtung (y) ausgebildet ist.

3. Vorrichtung (10) nach Anspruch 1 oder 2,
**dadurch gekennzeichnet, dass**
die Stempel (3) beheizbar ausgebildet sind.

4. Vorrichtung (10) nach einem der Ansprüche 1, 2 oder 3
**gekennzeichnet durch**
eine Steuerung zur Koordinierung der Bewegung der Stempel (3) und der Schienen (4), welche insbesondere dazu eingerichtet ist, zum Falten des Separators (1) die Schienen (4) voneinander weg und die Stempel (3) aufeinander zu zu bewegen.

5. Verfahren zum Herstellen einer stapelförmigen Elektroden-Separatoren-Anordnung für eine Batterieeinzelzelle mit einem durchlaufenden Separator (1), wobei in einem ersten Verfahrensschritt die Elektroden (2) auf den Separator auflaminiert werden, wobei auf jeder der Oberflächen des Separators (1) in dessen Längsrichtung (x) jeweils eine Elektrode (2) auf einen freien Abschnitt mit zumindest der Länge der Elektrode (2) folgt, wobei auf jeder der Oberflächen des Separators (1) jeweils Elektroden (2) derselben Polarität angeordnet sind, und wobei die Elektroden unterschiedlicher Polarität auf den jeweiligen Oberflächen sich zumindest teilweise gegenüberliegen, wonach in einem zweiten Verfahrensschritt das Halbzeug aus dem Separator (1) und den auflaminierten Elektroden (2) in einer Vorrichtung (10) nach einem Ansprüche 1 bis 4 z-förmig gefaltet wird, indem die Schienen (4) und die Stempel (3) in ihre jeweilige Endposition verfahren werden, und wonach
in einem weiteren Verfahrensschritt die gestapelte Elektroden-Separatoren-Anordnung in der Endposition der Stempel (3) zu einer Einheit fixiert wird.. **dadurch gekennzeichnet, dass**
in der fixierten Einheit der Separator (1) im Bereich der Streben (6) aufgetrennt wird, um die Streben (6) quer zur Laufrichtung durch das Material des Separators (1) aus der Einheit zu entfernen.

6. Verfahren zum Herstellen einer stapelförmigen Elektroden-Separatoren-Anordnung für eine Batterieeinzelzelle mit einem durchlaufenden Separator (1), wobei in einem ersten Verfahrensschritt der Separator (1) in einer Vorrichtung (10) nach einem der Ansprüche 1 bis 4 z-förmig vorgefaltet wird, indem die Schienen (4) und
Stempel (3) in Richtung ihrer jeweiligen Endposition verfahren und vor dem Erreichen der jeweiligen Endposition gestoppt werden, wonach in einem zweiten Verfahrensschritt Elektroden (2) der einen Polarität simultan von einer der Seiten aus und anschließend die Elektroden (2) der anderen Polarität simultan von der anderen Seite aus oder die Elektroden (2) unterschiedlicher Polaritäten simultan von beiden Seiten aus in die jeweiligen Taschen des z-förmig gefalteten Separators (1) eingeschoben werden, wonach
in einem dritten Verfahrensschritt die Schienen (4) und Stempel (3) in ihre jeweilige Endposition verfahren werden, und wonach
in einem weiteren Verfahrensschritt die gestapelte Elektroden-Separatoren-Anordnung in der Endposition der Stempel (3) zu einer Einheit fixiert wird **dadurch gekennzeichnet, dass**
in der fixierten Einheit der Separator (1) im Bereich der Streben (6) aufgetrennt wird, um die Streben (6) quer zur Laufrichtung durch das Material des Separators (1) aus der Einheit zu entfernen.

## Claims

1. Device (10) for z-shaped folding of a band-shaped separator (1) extending in a longitudinal direction (x) for an electrode-separator arrangement of a single battery cell, comprising two stamps (3) for clamping the separator (1) at the two ends thereof in the longitudinal direction (x), brackets (5) arranged between the two stamps (3) being provided, which brackets are the same distance from one another in the longitudinal direction (x) and which have struts (6) in a transverse direction (y) running transversely to the longitudinal direction (x), rails (4) being designed to be movable transversely to the longitudinal direction (x) and transversely to the transverse direction (y) in a vertical direction (z), and the struts (6) being arranged alternately in the vertical direction (z) above and below the clamping position of the separator (1), when viewed in the longitudinal direction (x)
**characterized in that**
the brackets (5) are accommodated so as to be movable in the longitudinal direction (1) on rails (4) running in the longitudinal direction (x), the struts (6) being designed to be heatable and/or a cutting device being provided for cutting through the separator (1) in a position in which the stamps (3) are moved as close together as possible, in order to pull the struts (6) out of the separator (1) transversely to the running direction through the material of the separator (1).

2. Device (10) according to claim 1,
**characterized in that**
the length of the struts (6) in the transverse direction (y) is greater than the width of the separator (1) in the transverse direction (y).

3. Device (10) according to either claim 1 or claim 2,
**characterized in that**
the stamps (3) are designed to be heatable.

4. Device (10) according to any of claims 1, 2 or 3,
**characterized by**
a controller for coordinating the movement of the stamps (3) and the rails (4), which controller is particularly designed to move the rails (4) away from each other and the stamps (3) toward each other in order to fold the separator (1).

5. Method for producing a stacked electrode-separator arrangement for a single battery cell comprising a continuous separator (1), in a first method step the electrodes (2) being laminated onto the separator, an electrode (2) being placed on each of the surfaces of the separator (1) in the longitudinal direction (x) thereof on a free portion which is at least the length of the electrode (2), electrodes (2) of the same polarity being arranged on each of the surfaces of the separator (1), and the electrodes of different polarity on the respective surfaces being at least partially opposite one another, after which
in a second method step, the semi-finished product is folded in a z-shape from the separator (1) and the laminated electrodes (2) in a device (10) according to any of claims 1 to 4, by moving the rails (4) and the stamps (3) into their respective end positions, and after which
in a further method step, the stacked electrode-separator arrangement is fixed in the end position of the stamps (3) to form a unit.
**characterized in that**
in the fixed unit, the separator (1) is separated in the region of the struts (6) in order to remove the struts (6) from the unit transversely to the running direction through the material of the separator (1).

6. Method for producing a stacked electrode-separator arrangement for a single battery cell comprising a continuous separator (1), in a first method step the separator (1) being pre-folded in a z-shape in a device (10) according to any of claims 1 to 4, by moving the rails (4) and stamps (3) in the direction of the respective end positions thereof and stopping them before reaching the respective end positions, after which
in a second method step, electrodes (2) of the one polarity are inserted simultaneously from one of the sides and then the electrodes (2) of the other polarity are inserted simultaneously from the other side or the electrodes (2) of different polarities are inserted simultaneously from both sides into the respective pockets of the z-shaped folded separator (1), after which
in a third method step, the rails (4) and stamps (3) are moved into the respective end positions thereof, and after which
in a further method step, the stacked electrode-separator arrangement is fixed in the end position of the stamps (3) to form a unit
**characterized in that**
in the fixed unit, the separator (1) is separated in the region of the struts (6) in order to remove the struts (6) from the unit transversely to the running direction through the material of the separator (1).

## Revendications

1. Dispositif (10) pour le pliage en forme de z d'un séparateur (1) en forme de bande s'étendant dans une direction longitudinale (x) pour un agencement d'électrodes et de séparateurs d'une cellule individuelle de batterie, comportant deux poinçons (3) pour le serrage du séparateur (1) à ses deux extrémités dans la direction longitudinale (x), dans lequel des étriers (5) agencés entre les deux poinçons (3) sont prévus, lesquels présentent la même distance l'un par rapport à l'autre dans la direction longitudinale (x), et lesquels présentent des entretoises (6) dans une direction transversale (y) s'étendant transversalement à la direction longitudinale (x), dans lequel des rails (4) sont réalisés mobiles transversalement à la direction longitudinale (x) et transversalement à la direction transversale (y) dans une direction de hauteur (z), et dans lequel les entretoises (6) sont agencées, vues dans la direction longitudinale (x), alternativement dans la direction de hauteur (z) au-dessus et au-dessous de la position de serrage du séparateur (1)
**caractérisé en ce que**
les étriers (5) sont reçus de manière mobile le long de la direction longitudinale (1) sur des rails (4) s'étendant dans la direction longitudinale (x), dans lequel les entretoises (6) sont réalisées de manière à pouvoir être chauffées et/ou un dispositif de coupe est prévu pour sectionner le séparateur (1) dans une position des poinçons (3) déplacée au maximum l'un vers l'autre, afin d'extraire les entretoises (6) du séparateur (1) transversalement à la direction de déplacement à travers le matériau du séparateur (1).

2. Dispositif (10) selon la revendication 1,
**caractérisé en ce que**
la longueur des entretoises (6) dans la direction transversale (y) est réalisée plus grande que la largeur du séparateur (1) dans la direction transversale (y).

3. Dispositif (10) selon la revendication 1 ou 2,
**caractérisé en ce que**
les poinçons (3) sont réalisés de manière à pouvoir être chauffés.

4. Dispositif (10) selon l'une des revendications 1, 2 ou 3
**caractérisé par**
une commande pour la coordination du mouvement des poinçons (3) et des rails (4), laquelle est en particulier conçue pour éloigner les rails (4) les uns des autres et rapprocher les poinçons (3) les uns des autres pour plier le séparateur (1).

5. Procédé de fabrication d'un agencement d'électrodes et de séparateurs empilé pour une cellule individuelle de batterie comportant un séparateur (1) continu, dans lequel les électrodes (2) sont laminées sur le séparateur dans une première étape de procédé, dans lequel une électrode (2) est respectivement placée sur chacune des surfaces du séparateur (1) dans sa direction longitudinale (x) sur une section libre comportant au moins la longueur de l'électrode (2), dans lequel des électrodes (2) de même polarité sont respectivement agencées sur chacune des surfaces du séparateur (1), et dans lequel les électrodes de polarité différente sur les surfaces respectives se font au moins partiellement face, après quoi
dans une deuxième étape de procédé, le produit semi-fini est plié en forme de z à partir du séparateur (1) et des électrodes (2) laminées dans un dispositif (10) selon l'une des revendications 1 à 4, en déplaçant les rails (4) et les poinçons (3) dans leur position finale respective, et après quoi
dans une autre étape de procédé, l'agencement d'électrodes et de séparateurs empilé est fixé en une unité dans la position finale des poinçons (3).
**caractérisé en ce que**
dans l'unité fixée, le séparateur (1) est sectionné dans la zone des entretoises (6) afin d'enlever les entretoises (6) de l'unité transversalement à la direction de déplacement à travers le matériau du séparateur (1).

6. Procédé de fabrication d'un agencement d'électrodes et de séparateurs empilé pour une cellule individuelle de batterie comportant un séparateur (1) continu, dans lequel, dans une première étape de procédé, le séparateur (1) est pré-plié en forme de z dans un dispositif (10) selon l'une des revendications 1 à 4, en déplaçant les rails (4) et les poinçons (3) en direction de leur position finale respective et en les arrêtant avant d'atteindre la position finale respective, après quoi
dans une deuxième étape de procédé, des électrodes (2) d'une polarité sont introduites simultanément depuis l'un des côtés et ensuite les électrodes (2) de l'autre polarité sont introduites simultanément depuis l'autre côté ou les électrodes (2) de polarités différentes sont introduites simultanément depuis les deux côtés dans les poches respectives du séparateur (1) plié en forme de z, après quoi
dans une troisième étape de procédé, les rails (4) et les poinçons (3) sont déplacés dans leur position finale respective, et après quoi
dans une autre étape de procédé, l'agencement d'électrodes et de séparateurs empilé est fixé en une unité dans la position finale des poinçons (3)
**caractérisé en ce que**
dans l'unité fixée, le séparateur (1) est sectionné dans la zone des entretoises (6) afin d'enlever les entretoises (6) de l'unité transversalement à la direction de déplacement à travers le matériau du séparateur (1).
